# EUROPÄISCHE PATENTSCHRIFT

(11) **EP 1 661 530 B1**
(45) Veröffentlichungstag und Bekanntmachung des Hinweises auf die Patenterteilung: **30.03.2011**
(21) Anmeldenummer: 05024996.0
(22) Anmeldetag: 16.11.2005
(51) Int. Cl.: A61C 17/22

(54) **Batteriebetriebene Zahnbürste**
Battery powered toothbrush
Brosse à dent alimentée par une pile électrique

(30) Priorität: 30.11.2004 DE 102004057566
(43) Veröffentlichungstag der Anmeldung: 31.05.2006
(73) Patentinhaber: Braun GmbH, 61476 Kronberg (DE)
(72) Erfinder: Birk, Andreas, 61476 Kronberg (DE); Wasow, Sören, 55118 Mainz (DE)

(56) Entgegenhaltungen:
- WO-A-01/82825
- US-A1- 2004 007 244
- US-A1- 2004 154 113

## Beschreibung

Die Erfindung betrifft eine batteriebetriebene Zahnbürste nach dem Oberbegriff des Patentanspruchs 1 sowie ein Verfahren hierzu.

Aus der DE 102 45 086 A1 ist bereits eine batteriebetriebene Zahnbürste bekannt, bei der die Antriebseinheit bzw. wesentliche Teile der Antriebseinheit beim Spritzvorgang des die Antriebseinheit aufnehmenden Gehäuseabschnitts umspritzt werden und so bereits ortsfest im Gehäuseabschnitt fixiert ist. Eine derartige Fixierung der Antriebseinheit kann dann, wenn temperaturempfindliche Bauteile verwendet werden, dazu führen, daß diese aufgrund der thermischen Einwirkung beim Spritzvorgang bereits beschädigt oder gar zerstört werden.

Des weiteren ist eine von der Anmelderin selbst vertriebene batteriebetriebene Zahnbürste bekannt, die unter der Bezeichnung "Braun Oral-B Cross Action Power" im Handel erhältlich ist. Diese batteriebetriebene Zahnbürste besteht aus einem rohrförmigen Gehäuse, an dessen einem Ende ein Zahnbürstenkopf befestigt ist. Am anderen Ende ist eine Öffnung ausgebildet, über die bei der Werksmontage die in einem vormontierten Trageteil vorzugsweise durch Einklipsen befestigte Antriebseinheit in den rohrförmigen Gehäuseabschnitt eingeschoben wird. An dem Trageteil befinden sich zwei Rastmittel, die beim Einschieben der Antriebseinheit mitsamt dem Trageteil in zwei am Gehäuseteil ausgebildete Durchgangsöffnungen rastend einschnappen.

Die Durchgangsöffnungen sind in Nähe der Öffnung innerhalb des Gewindes ausgebildet, welches anschließend mit einer ebenfalls mit einem entsprechenden Gewinde ausgebildeten Verschlußkappe drehfest verbunden wird. In dem Trageteil und somit im Gehäuseabschnitt ist weiterhin eine auswechselbare Batterie zur Stromversorgung eingesetzt, die über Kontaktfahnen mit der Antriebseinheit elektrisch verbunden ist. Im montierten Zustand der Antriebseinheit ragt aus der Öffnung noch ein Teil der Batterie sowie ein Teil der Trageeinheit nach außen hervor, die beim Verschrauben der Verschlußkappe mit dem Gehäuseabschnitt in dieser teilweise aufgenommen werden, während der vordere Teil der Antriebseinheit und des Trageteils in der Bohrung des Gehäuseabschnittes aufgenommen ist.

Der rohrförmige Gehäuseabschnitt besteht aus Kunststoff und wird in einem Spritzvorgang in einem Werkzeug ausgeformt. Damit über die Durchgangsöffnungen von außen keine Feuchtigkeit in das Innere der Antriebseinheit eindringen kann, sind die Durchgangsöffnungen im Gewindeabschnitt ausgebildet, der beim Verschließen mit der Verschlußkappe von dieser dichtend umschlossen wird. Ein am Gewinde eingesetzter O-Ring führt zu absoluter Dichtheit zwischen der Verschlußkappe und dem Gehäuseabschnitt. Die Anordnung der Durchgangsöffnungen im Gewindebereich des Gehäuseabschnittes führt allerdings zu dem Nachteil, daß die Durchgangsöffnungen ortsgebunden am Gehäuseabschnitt im Bereich des Gewindes ausgebildet sein müssen. Will man die Durchgangsöffnungen allerdings an einer beliebigen Stelle am Gehäuseabschnitt ausbilden, so ist dies nur dann möglich, wenn man die Durchgangsöffnungen anschließend oder bereits während der Herstellung des Gehäuseabschnittes an der radial äußeren Mantelfläche des Gehäuseabschnittes dichtend verschließt.

Aus der WO 01/82825 A1 ist eine elektrische Zahnbürste bekannt, bei der eine hintere Verschlussöffnung mittels einer Schnapp- bzw. Rastverbindung lösbar mit einem rohrförmigen Außengehäuse verbunden ist. Die Schnappverbindung ist dabei durch einen inneren Fortsatz der Abschlusskappe gebildet, der mit einem inwandigen Schnapphaken am rohrförmigen Gehäuse einschnappt. Damit dieser hintere Verschluß geöffnet werden kann, weist das rohrförmige Gehäuse einen Softkunststoffabschnitt auf, der nicht von einem inwandigen Hartkunststoff unterlegt ist, und über dessen Verformung unmittelbar der Fortsatz der Abschlußkappe axial nach innen drückbar ist, so dass sich die Schnappverbindung löst und der Verschluß beispielsweise für einen Batteriewechsel geöffnet werden kann.

Aus der US 2004/0007244 A1 ist eine elektrische Zahnbürste der eingangs genannten Art bekannt. Hierbei weist die äußere rohrförmige Gehäusewandung einen Hinterschnitt auf, der im Hartkunststoff des Gehäuseabschnitts gebildet ist. Dieser Hinterschnitt im Gehäuseabschnitt ist nach außen von einem Softkunststoff überdeckt und nach innen als freie Ausnehmung ausgebildet, in die Rastmittel federnd eingreifen.

Aufgabe der Erfindung ist es nun, Mittel zu finden, die es ermöglichen, die Durchgangsöffnungen an beliebiger Stelle des Gehäuseabschnittes auszubilden und dabei zu gewährleisten, daß über diese keine Feuchtigkeit in das Gehäuseinnere des Gehäuseabschnitts gelangt. Dabei soll weiterhin eine einfache und kostengünstige Herstellung sowie Montage beibehalten werden.

Diese Aufgabe wird erfindungsgemäß durch die kennzeichnenden Merkmale des Patentanspruchs 1 gelöst. Nachdem also die Durchgangsöffnungen beim Spritzvorgang des Gehäuseabschnittes an beliebiger Stelle des Gehäuseabschnittes ausgebildet werden, werden diese in einem zweiten Spritzvorgang in einem Werkzeug durch ein thermoplastisches Elastomer ausgespritzt und damit verschlossen. An der Antriebseinheit sind entweder an dieser selbst oder an dem mit der Antriebseinheit verbundenen Trageteil radial nach außen wirkende federnde Rastmittel ausgebildet, die beim Einbringen der Antriebseinheit in den Gehäuseabschnitt und Fluchten dieser mit dem durch das thermoplastische Elastomer verschlossenen Durchgangsöffnungen in diese dennoch eingreifen, weil die nach außen gerichtete Federkraft der Rastelemente so groß bemessen ist, daß sie das thermoplastische Elastomer in geringem Maße zumindest soweit radial nach außen verdrängen, daß diese in die Durchgangsbohrungen eingreifen und so ein sicherer Halt bzw. Fixierung der Antriebseinheit in der Bohrung des Gehäuseabschnittes gewährleistet wird. Dabei greifen die Rastelemente nur so gering in die Durchgangsöffnungen ein, daß das durch die Rastelemente verdrängte thermoplastische Elastomer nicht deutlich sichtbar an der Oberfläche herausragt, was dann letztendlich eine Erhebung oder Beule ergeben würde. Mit der Erfindung wird also eine einfache Verrastung der Antriebseinheit mit dem Gehäuseabschnitt gewährleistet, wobei über die Durchgangsöffnungen nach innen nicht Feuchtigkeit eindringen kann, weil diese durch das thermoplastische Elastomer dichtend verschlossen sind.

Selbstverständlich könnte man auch an der Innenwand der Bohrung des Gehäuseabschnittes Sacklochbohrungen anbringen, in die dann beim Einschieben der Antriebseinheit die an dieser ausgebildeten Rastelemente rastend eingreifen könnten. Hierzu müßten aber bei dem Spritzvorgang des aus Kunststoff hergestellten Gehäuseabschnittes im Werkzeug Schieber ausgebildet sein, die von innen her die Sacklochbohrungen ausformen. Dies führt zu einem aufwendigen Spritzwerkzeug, wodurch die Herstellkosten erhöht werden würden.

Bei aus Kunststoff gespritzten Gehäuseabschnitten, bei denen ohnehin zur besseren Griffigkeit und zur anmutigeren Formgestaltung thermoplastische Elastomere als Einlagen ausgeformt werden, ist eine derartige nach der Erfindung angegebene Verriegelungsmaßnahme sinnvoll, ohne dabei die Herstell- oder Montagekosten zu erhöhen. Derartige thermoplastische Flächenelemente können auch noch farblich gegenüber dem üblichen Gehäuseabschnitt abgesetzt werden, so daß sie neben besserer Griffigkeit auch die Formgestaltung des Gehäuseabschnittes prägend definieren können.

Durch die Merkmale des Patentanspruchs 2 schließen sich an die Durchgangsöffnungen an der Außenfläche des Gehäuseabschnittes Vertiefungen an, die wie die Durchgangsöffnungen ebenfalls von einem thermoplastischen Elastomer abgedeckt sind. Auf diese Weise kann man die Oberfläche des Gehäuseabschnittes durch gebildete elastomere Flächenelemente verändern.

Durch die Merkmale des Patentanspruchs 3 reicht bereits eine geringe Überschneidung der am Rastmittel ausgebildeten Stirnfläche mit der Wand der Durchgangsöffnung aus, um bereits einen sicheren Halt nach Einrasten der Rastmittel in der Durchgangsöffnung zu gewährleisten. Ein Lösen des Rastmittels aus der Durchgangsöffnung und somit eine Entnahme der Antriebseinheit aus der Bohrung des Gehäuseabschnittes wäre nur dann möglich, wenn man von außen her im Bereich der Durchgangsöffnungen das thermoplastische Elastomer so stark radial nach innen drückt, daß dabei die Rastmittel radial nach innen bewegt werden, bis keine Überschneidung der Stirnfläche mit der Bohrung mehr vorhanden ist. In der Regel ist aber die Antriebseinheit dauerhaft in der Bohrung des Gehäuseabschnittes fixiert, so daß eine Entnahme dieser durch einen Verbraucher nach ihrer Montage nicht mehr möglich ist. Bei einem defekten Antriebsmotor wird daher in der Regel die komplette batteriebetriebene Zahnbürste entsorgt werden.

Durch die Merkmale des Patentanspruchs 4 wird eine besonders feste Verbindung zwischen dem Trageteil und dem Gehäuseabschnitt erreicht, weil die Abstützflächen senkrecht zur Verschieberichtung verlaufen.

Durch die Merkmale des Patentanspruchs 5 wird ein Verfahren geschaffen, das äußerst einfach und dennoch eine wirkungsvolle Verrastung der Antriebseinheit mit dem Gehäuseabschnitt gewährleistet.

Ein Ausführungsbeispiel der Erfindung ist in der Zeichnung dargestellt und wird im folgenden näher erläutert. Es zeigen:
- Fig. 1: einen Teillängsschnitt durch den Gehäuseabschnitt mit bereits in der Bohrung des Gehäuseabschnittes eingesetzter Antriebseinheit in vergrößertem Maßstab und
- Fig. 2: eine vergrößerte Darstellung im Bereich der an einem Trageteil für die Antriebseinheit ausgebildeten Verrastung mit dem Gehäuseabschnitt.

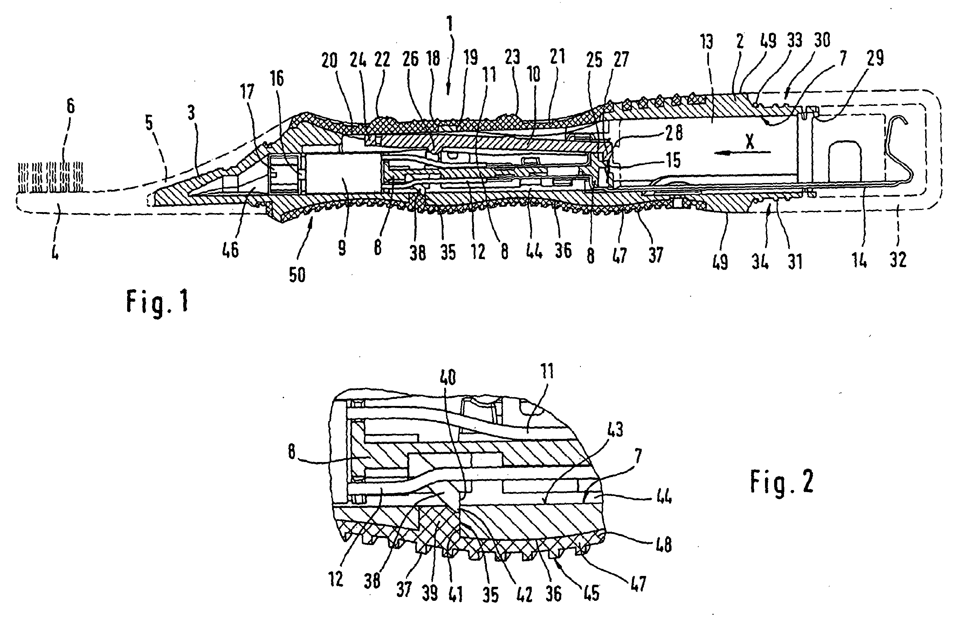

Die in Fig. 1 im Teillängsschnitt dargestellte batteriebetriebene Zahnbürste 1 besteht im wesentlichen aus einem rohrförmigen Gehäuseabschnitt 2, an dessen vorderen geschlossenen Ende 3 ein mit einem Zahnbürstenkopf 4 versehener Halsabschnitt 5 durch Verklipsen unverlierbar befestigt ist. Der Halsabschnitt 5 und der Zahnbürstenkopf 4 mit den daran ausgebildeten Borsten 6 ist gestrichelt dargestellt. In der Sacklochbohrung 7 des Gehäuseabschnitts 2 ist eine Aufnahmekammer 44 ausgebildet, in der sich im vorderen Abschnitt 46 ein langgestrecktes Trageteil 8 befindet, das sowohl den elektrischen Antriebsmotor 9, den Wippschalter 10, elektrische Leitungen 11, 12, wie die von einer Batterie 13 (gestrichelt dargestellt) abgehenden Kontaktfahnen 14, 15 trägt. Aus dem Antriebsmotor 9 ragt eine Antriebswelle 16 nach vorne zum freien Ende 3 heraus, an der eine Exzentermasse 17 befestigt ist.

Der Gehäuseabschnitt 2 weist in Höhe des Wippschalters 10 zwei hintereinander angeordnete Durchbrüche 18, 19 auf, die von elastomeren Wänden 20, 21 verschlossen sind. An den Wänden 20, 21 ragen nach außen Erhebungen 22, 23 hervor, die als Betätigungsorgane für den Wippschalter 10 dienen. Beim Betätigen einer Erhebung 22 bzw. 23 wird die elastomere Wand 20 bzw. 21 so weit nach innen gedrückt, daß dabei entweder das in der Zeichnung nach Fig. 1 linke Ende 24 oder das rechte Ende 25 um den Drehpunkt 26 des Wippschalters 10 ein Stückchen geschwenkt wird. Bei Stromunterbrechung, also Ausschalten des Gerätes 1, greift das am rechten Ende 25 des Wippschalters 10 ausgebildete Winkelstück 27 zwischen einem der Batteriepole 28, insbesondere dem Minuspol oder dem Pluspol 28 und der Kontaktfahne 15 ein, so daß kein Strom über die elektrischen Leitungen 11, 12 zum Antriebsmotor 9 fließen kann und dieser daher ausgeschaltet ist.

Die Batterie 13 ragt teilweise aus der am rechten Ende des Gehäuseabschnitts 2 ausgebildeten Öffnung 29 heraus und wird durch das freie Ende der Kontaktfahne 14 federnd in der Bohrung 7 gehalten. Zum Verschließen der Öffnung 29 ist an ihrem Ende 30 ein Gewinde 31 ausgebildet, das mit einem an einer Schutzkappe 32 entsprechend ausgebildeten Gewinde (nicht dargestellt) derart verschraubt wird, daß die Schutzkappe 32 (gestrichelt dargestellt) dichtend die Öffnung 29 verschließt. Dabei greift ein O-Ring 33 an der Innenfläche der Schutzkappe 32 ein und stellt somit eine dichte Verbindung zwischen der Schutzkappe 32 und dem Gewindeabschnitt 34 her.

Nach Fig. 1 ist an der Unterseite des Gehäuseabschnittes 2 eine radial durch die Wand des Gehäuseabschnitts 2 verlaufende Durchgangsbohrung 35 ausgebildet, die ebenfalls durch thermoplastische Elastomermasse verschlossen ist. An der Unterseite schließt sich an die Durchgangsbohrung 35 eine flächenhaft ausgebildete Rinne 36 an, die über einen Teil des Umfangs des Gehäuseabschnitts 2 verläuft und die ebenfalls mit einer dünnen Schicht 47 von thermoplastischem Elastomer verschlossen ist, das an seiner Mantelfläche 45 von Querriffelungen 37 strukturiert wird. Die Mantelfläche 45 des TPE-Materials 39 bildet mit der Polypropylen-Mantelfläche 49 die Außenfläche 50 der Zahnbürste 1.

Wie aus Fig. 2 hervorgeht, sind an dem Trageteil 8 zwei Rastmittel 38 in Form von Rasthaken in Umfangsrichtung nebeneinander angeordnet, die beim Einsetzen in Richtung X des mit der Antriebseinheit 9 verbundenen Trageteils 8 in die Bohrung 35 bzw. in die Aufnahmekammer 44 eingreifen, sobald die Rasthaken 38 mit dieser fluchten. Dabei wird das elastomere Material 39, das sich in der Bohrung 35 befindet so weit nach außen verdrängt, daß der Rasthaken 38 mit seiner Stirnfläche 40 an der Wand 41 zur Anlage gelangt. Beim Einsetzen des Trageteils 8 in die Bohrung 7 in Richtung X gleitet die am Rasthaken 38 am vorderen Ende ausgebildete Spitze 42 an der Wand 43 der Bohrung 7, bis diese die Bohrung 35 erreicht und in diese aufgrund seiner vorgespannten Lage federnd eingreift und dabei thermoplastisches Material 39 verdrängt. Die Bohrungen 35 werden von Durchgangsöffnungen gebildet, die durch das thermoplastische Elastomer 39 verschlossen sind. Der Gehäuseabschnitt 2 ist aus einem härteren Kunststoffmaterial, vorzugsweise Polypropylen, gespritzt, an den anschließend in einem zweiten Spritzwerkzeug das thermoplastische Elastomer 39 auf- bzw. angespritzt wird. Das weichere Elastomer ist in den Figuren 1 und 2 durch gekreuzte Schraffur 48 gekennzeichnet.

## Patentansprüche

1. Batteriebetriebene Zahnbürste (1) mit einem eine Antriebseinheit (9) aufnehmenden rohrförmigen Gehäuseabschnitt (2), an dessen vorderen Ende (3) ein mit Borsten (6) versehener Zahnbürstenkopf (4) ausgebildet ist und an dessen entgegengesetztem Ende eine Einlaßöffnung (29) mit sich daran anschließender Aufnahmekammer (44) zum Einführen der Antriebseinheit (9) vorgesehen ist, wobei an der Antriebseinheit (9) mindestens ein Rastmittel (38) vorgesehen ist, das bei korrekter Einbaulage der Antriebseinheit in ein oder mehrere entsprechend am Gehäuseabschnitt (2) ausgebildete Durchgangsöffnungen (35) von innen her federnd eingreift und so die Antriebseinheit (9) in der Aufnahmekammer (44) des Gehäuseabschnittes (2) ortsfest fixiert,
**dadurch gekennzeichnet,**
**daß** die Durchgangsöffnung (35) von einem thermoplastischen Elastomer (TPE) (39) ausgefüllt ist und daß die Federkraft des Rastmittels (38) so stark bemessen ist, daß beim Einrasten in die Öffnung (35) ein Teil des thermoplastischen Elastomers (39) durch das Rastmittel (38) elastisch nach außen verdrängt wird.

2. Zahnbürste nach Anspruch 1,
**dadurch gekennzeichnet,**
**daß** die Durchgangsöffnung (35) an ihrer Außenseite in einer gegenüber der äußeren Mantelfläche tiefer liegenden Rinne (36) mündet und daß die Rinne (36) sowie die Durchgangsöffnung (35) von einem thermoplastischen Elastomer verschlossen sind, dessen nach außen zeigende Mantelfläche (45) zusammen mit der Mantelfläche (49) des Gehäuseabschnitts (2) die Außenfläche (50) der Zahnbürste (1) bildet.

3. Zahnbürste nach Anspruch 2,
**dadurch gekennzeichnet,**
**daß** das Rastmittel (38) aus mindestens einem in Richtung zum offenen Ende des Gehäuseabschnitts (2) verlaufenden, nach außen gerichteten Rasthaken besteht, dessen am freien Ende ausgebildete quer zur Längsrichtung der Aufnahmekammer (44) verlaufende Stirnfläche (40) als Anschlagfläche in der Wand (41) der Durchgangsöffnung (35) dient.

4. Zahnbürste nach Anspruch 3,
**dadurch gekennzeichnet,**
**daß** die Wand (41) der Durchgangsöffnung (35) des Gehäuseabschnitts (2) sowie die Stirnfläche (40) des Rasthakens (38) senkrecht zur Verschieberichtung (X) beim Montieren der Antriebseinheit (9) in die Aufnahmekammer (44) des Gehäuseabschnitts (2) verläuft.

5. Verfahren zum Herstellen einer batteriebetriebenen Zahnbürste (1) nach Anspruch 1 und 2,
**dadurch gekennzeichnet,**
**daß** zunächst der rohrförmige Gehäuseabschnitt (2) und die Bohrung (35) in einem Spritzwerkzeug ausgeformt werden, daß anschließend in einem zweiten Spritzwerkzeug die Bohrung (35) sowie die sich an die Bohrung (35) anschließende Rinne (36) mit einem thermoplastischen Elastomer (TPE) (39) bespritzt wird und daß im anschließenden Arbeitsgang die Antriebseinheit (9) in die Aufnahmekammer (44) so weit in Richtung (X) eingeschoben wird, bis das Rastelement (38) von innen her in die Durchgangsöffnung (35) eingreift und dabei ein Teil des in der Öffnung (35) befindlichen thermoplastischen Elastomer (39) radial nach außen verdrängt.

## Claims

1. A battery-operated toothbrush (1) having a tubular housing section (2) accommodating a drive unit (9), at the front end (3) of which housing section is formed a toothbrush head (4) provided with bristles (6), and at the opposite end of which housing section is provided an opening (29) having an accommodation compartment (44) adjoining the opening for insertion of the drive unit (9), wherein there is provided on the drive unit (9) at least one detent means (38) which, when the drive unit is in the proper installation position thereof, resiliently engages from the inside into one or a plurality of corresponding through-openings (35) formed on the housing section (2) and in this manner fixedly secures the drive unit (9) in the accommodation compartment (44) of the housing section (2),
**characterized in**
**that** the through-opening (35) is filled in with a thermoplastic elastomer (TPE) (39) and that the springiness of the detent means (38) is dimensioned such that when the detent means snaps into place in the opening (35), a portion of the thermoplastic elastomer (39) is elastically displaced outward by the detent means (38).

2. The toothbrush according to Claim 1,
**characterized in**
**that** the through-opening (35) opens at the outside thereof into a groove (36) that is sunken relative to the outer circumferential surface and that the groove (36) and through-opening (35) are sealed with a thermoplastic elastomer, the outward circumferential surface (45) of which together with the circumferential surface (49) of the housing section (2) forms the outer surface (50) of the toothbrush (1).

3. The toothbrush according to Claim 2,
**characterized in**
**that** the detent means (38) comprises at least one outward facing detent hook extending in the direction toward the open end of the housing section (2), the front face (40) of which detent hook is formed at a free end of the detent hook in a manner extending transverse to the longitudinal direction of the accommodation compartment (44), the front face serving as a stop surface in the wall (41) of the through-opening (35).

4. The toothbrush according to Claim 3,
**characterized in**
**that** the wall (41) of the through-opening (35) of the housing section (2) and the front face (40) of the detent hook (38) extend perpendicular to the direction of displacement (X) during the installation of the drive unit (9) in the accommodation compartment (44) of the housing section (2).

5. A method for producing a battery-operated toothbrush (1) according to Claims 1 and 2,
**characterized in**
**that** first the tubular housing section (2) and the bore (35) are molded in a molding die, the bore (35) and the groove (36) adjoining the bore (35) are subsequently sprayed with a thermoplastic elastomer (TPE) (39) in a second molding die, and in the subsequent operating step, the drive unit (9) is pushed far enough into the accommodation compartment (44) in the direction (X) to where the detent element (38) engages from the inside into the through-opening (35) and, in the process, displaces radially outward a portion of the thermoplastic elastomer (39) located in the opening (35).

## Revendications

1. Brosse à dents à piles (1) comprenant une section de boîtier tubulaire (2) logeant une unité d'entraînement (9), à l'extrémité avant (3) de laquelle est conçue une tête de brosse à dents (4) pourvue de poils (6) et à l'extrémité opposée de laquelle est prévue une ouverture d'admission (29) dotée d'une chambre de réception (44) s'y raccordant pour l'introduction de l'unité d'entraînement (9), l'unité d'entraînement (9) présentant au moins un moyen d'encliquetage (38) qui, dans la position de montage correcte de l'unité d'entraînement, s'encliquette élastiquement par l'intérieur dans un ou plusieurs orifices de passage (35) réalisés de manière correspondante sur la section de boîtier (2) et fixe ainsi de manière immobile l'unité d'entraînement (9) dans la chambre de réception (44) de la section de boîtier (2),
**caractérisée en ce que**
l'orifice de passage (35) est rempli par un élastomère thermoplastique (TPE) (39) et **en ce que** la force élastique du moyen d'encliquetage (38) est calculée de façon telle qu'à l'encliquetage dans l'orifice (35), une partie de l'élastomère thermoplastique (39) est déplacée élastiquement vers l'extérieur par le moyen d'encliquetage (38).

2. Brosse à dents selon la revendication 1,
**caractérisée en ce que**
l'orifice de passage (35) sur sa face extérieure débouche dans une rigole (36) située plus bas par rapport à la surface périphérique extérieure, et **en ce que** la rigole (36) ainsi que l'orifice de passage (35) sont obturés par un élastomère thermoplastique, dont la surface périphérique (45) tournée vers l'extérieur forme, avec la surface périphérique (49) de la section de boîtier (2), la surface extérieure (50) de la brosse à dents (1).

3. Brosse à dents selon la revendication 2,
**caractérisée en ce que**
le moyen d'encliquetage (38) est constitué d'au moins un crochet d'encliquetage tourné vers l'extérieur, s'étendant en direction de l'extrémité ouverte de la section de boîtier (2), et dont la face frontale (40) conçue à l'extrémité libre et s'étendant transversalement au sens longitudinal de la chambre de réception (44) sert de surface de butée dans la paroi (41) de l'orifice de passage (35).

4. Brosse à dents selon la revendication 3,
**caractérisée en ce que**
la paroi (41) de l'orifice de passage (35) de la section de boîtier (2) ainsi que la face frontale (40) du crochet d'encliquetage (38) s'étendent perpendiculairement au sens de déplacement (X) lors du montage de l'unité d'entraînement (9) dans la chambre de réception (44) de la section de boîtier (2).

5. Procédé de fabrication d'une brosse à dents à piles (1) selon les revendications 1 et 2,
**caractérisé en ce que**
la section de boîtier tubulaire (2) et l'orifice (35) sont d'abord formés dans un moule d'injection, puis l'orifice (35) ainsi que la rigole (36) se raccordant à l'orifice (35) sont aspergés d'un élastomère thermoplastique (TPE) (39) dans un deuxième moule d'injection et, dans l'étape de travail suivante, l'unité d'entraînement (9) est insérée dans la chambre de réception (44) dans le sens (X) jusqu'à ce que l'élément d'encliquetage (38) s'encliquette par l'intérieur dans l'orifice de passage (35) et déplace ainsi une partie de l'élastomère thermoplastique (39) se trouvant dans l'orifice (35) radialement vers l'extérieur.
